# EUROPEAN PATENT APPLICATION

(11) **EP 4 838 150 A1**
(43) Date of publication of application: **11.11.2026**
(21) Application number: 26172607.9
(22) Date of filing: 15.04.2026
(51) Int. Cl.: F25B 1/00, F02C 7/12, F25B 21/00

(54) **EVAPORATIVE ION HEAT EXCHANGER WITH REFRIGERANT INJECTION IONIZATION RECLAIM SYSTEM**

(30) Priority: 22.04.2025 US 202519186059
(71) Applicant: RTX Corporation, Farmington, CT 06032 (US)
(72) Inventor: Avidane, Orin G., Lighthouse Point, 33064 (US)
(74) Representative: Schmitt-Nilson Schraud Waibel Wohlfrom Patentanwälte Partnerschaft mbB

(57) **Abstract**

An ionized refrigerant injection reclamation system including at least one evaporative cooling chamber having a working fluid inlet and a working fluid outlet fluidly coupled with the working fluid inlet; a refrigerant injector operatively coupled with the at least one evaporative cooling chamber; a refrigerant supply line fluidly coupled with the refrigerant injector; a condenser fluidly coupled with the refrigerant injector via the refrigerant supply line; a compressor in operative communication with the condenser; a reclaimer in operative communication with the compressor via a refrigerant collection line; and an ionizer in operative communication with the reclaimer and in operative communication with the at least one evaporative cooling chamber.

## Description

The present disclosure is directed to the improved evaporative ion heat exchanger with refrigerant injection and ionization reclaim.

Heat exchangers employ air as a working fluid to exchange thermal energy to/from another working fluid across a heat exchanger wall separating the working fluids. The use of air as a working fluid provides many benefits. Air is plentiful and readily available for use as a working fluid.

In accordance with the present disclosure, there is provided an ionized refrigerant injection reclamation system comprising at least one evaporative cooling chamber having a working fluid inlet and a working fluid outlet fluidly coupled with the working fluid inlet; a refrigerant injector operatively coupled with the at least one evaporative cooling chamber; a refrigerant supply line fluidly coupled with the refrigerant injector; a condenser fluidly coupled with the refrigerant injector via the refrigerant supply line; a compressor in operative communication with the condenser; a reclaimer in operative communication with the compressor via a refrigerant collection line; and an ionizer in operative communication with the reclaimer and in operative communication with the at least one evaporative cooling chamber.

Particular embodiments further may include at least one, or a plurality of, the following optional features, alone or in combination with each other:
A further embodiment of any of the foregoing embodiments may additionally and/or alternatively include a working fluid is fluidly coupled to a working fluid inlet of the evaporative cooling chamber and a working fluid outlet of the evaporative cooling chamber; the working fluid is fluidly coupled to the ionizer and the working fluid is fluidly coupled to the reclaimer downstream from the ionizer; the working fluid is fluidly coupled to a working fluid discharge on the reclaimer; and the working fluid is fluidly coupled to the flow passage downstream of the working fluid discharge on the reclaimer.

A further embodiment of any of the foregoing embodiments may additionally and/or alternatively include a refrigerant is fluidly coupled to the refrigerant injector from a refrigerant supply line fluidly coupled to the condenser; the refrigerant is fluidly coupled to a refrigerant discharge on the reclaimer to a refrigerant collection line; the refrigerant is fluidly coupled to the compressor along the refrigerant collection line; and the refrigerant is fluidly coupled to the condenser from the compressor.

A further embodiment of any of the foregoing embodiments may additionally and/or alternatively include the ionized refrigerant injection reclamation system further comprising an expansion valve fluidly coupled between the condenser and the refrigerant injector.

A further embodiment of any of the foregoing embodiments may additionally and/or alternatively include the ionized refrigerant injection reclamation system further comprising at least one reservoir fluidly coupled to the refrigerant collection line, wherein the at least one reservoir is configured to collect a refrigerant.

A further embodiment of any of the foregoing embodiments may additionally and/or alternatively include the condenser comprises a condenser coil, the condenser coil configured to condense a refrigerant from a vapor phase to a liquid phase.

A further embodiment of any of the foregoing embodiments may additionally and/or alternatively include the compressor is in operative communication with a gearbox, wherein the gearbox is configured to provide rotary mechanical energy to the compressor.

In accordance with the present disclosure, there is provided a gas turbine engine having an ionized refrigerant injection reclamation system comprising an air stream passage configured to flow an air stream through the gas turbine engine; a condenser fluidly coupled with the air stream passage; a compressor in operative communication with the condenser; a reclaimer in operative communication with the compressor via a refrigerant collection line; an ionizer in operative communication with the reclaimer; at least one evaporative cooling chamber having a working fluid inlet and a working fluid outlet fluidly coupled with the working fluid inlet, the ionizer in operative communication with the working fluid outlet; a refrigerant injector operatively coupled with the at least one evaporative cooling chamber; a refrigerant supply line fluidly coupled with the refrigerant injector; and the condenser fluidly coupled with the refrigerant injector via the refrigerant supply line.

Particular embodiments further may include at least one, or a plurality of, the following optional features, alone or in combination with each other:
A further embodiment of any of the foregoing embodiments may additionally and/or alternatively include the gas turbine engine having an ionized refrigerant injection reclamation system further comprising an expansion valve fluidly coupled between the condenser and the refrigerant injector.

A further embodiment of any of the foregoing embodiments may additionally and/or alternatively includethe gas turbine engine having an ionized refrigerant injection reclamation system further comprising a gearbox in operative communication with the compressor, wherein the gearbox is configured to provide rotary mechanical energy to the compressor.

A further embodiment of any of the foregoing embodiments may additionally and/or alternatively include the condenser comprises a condenser coil, the condenser coil configured to condense a refrigerant from a vapor phase to a liquid phase.

A further embodiment of any of the foregoing embodiments may additionally and/or alternatively include the gas turbine engine having an ionized refrigerant injection reclamation system further comprising a controller in operative communication with at least one of the evaporative cooling chamber, the ionizer, the reclaimer, the compressor, an expansion valve, a temperature sensor, a pressure sensor and a flow rate sensor.

A further embodiment of any of the foregoing embodiments may additionally and/or alternatively include the gas turbine engine having an ionized refrigerant injection reclamation system further comprising at least one reservoir fluidly coupled to the refrigerant collection line, wherein the at least one reservoir is configured to collect a refrigerant.

In accordance with the present disclosure, there is provided a process of forming gas turbine engine having an ionized refrigerant injection reclamation system comprising: forming an air stream passage; configuring the air stream passage to flow an air stream through the gas turbine engine; fluidly coupling a condenser with the air stream passage; fluidly coupling a compressor in operative communication with the condenser; fluidly coupling a reclaimer in operative communication with the compressor via a refrigerant collection line; fluidly coupling an ionizer in operative communication with the reclaimer; forming at least one evaporative cooling chamber having a working fluid inlet and a working fluid outlet fluidly coupled with the working fluid inlet, coupling the ionizer in operative communication with the working fluid outlet; operatively coupling a refrigerant injector with the at least one evaporative cooling chamber; fluidly coupling a refrigerant supply line with the refrigerant injector; and fluidly coupling the condenser with the refrigerant injector via the refrigerant supply line.

Particular embodiments further may include at least one, or a plurality of, the following optional features, alone or in combination with each other:
A further embodiment of any of the foregoing embodiments may additionally and/or alternatively include the process further comprising fluidly coupling an expansion valve between the condenser and the refrigerant injector.

A further embodiment of any of the foregoing embodiments may additionally and/or alternatively include the process further comprising coupling a gearbox in operative communication with the compressor; and configuring the gearbox to provide rotary mechanical energy to the compressor.

A further embodiment of any of the foregoing embodiments may additionally and/or alternatively include the condenser comprises a condenser coil; configuring the condenser coil to condense a refrigerant from a vapor phase to a liquid phase responsive to the air stream cooling the refrigerant.

A further embodiment of any of the foregoing embodiments may additionally and/or alternatively include the process further comprising configuring the reclaimer to remove a refrigerant from the working fluid; and separating the refrigerant and the working fluid in the reclaimer.

A further embodiment of any of the foregoing embodiments may additionally and/or alternatively include the process further comprising coupling a controller in operative communication with at least one of the evaporative cooling chamber, the ionizer, the reclaimer, the compressor, an expansion valve, a temperature sensor, a pressure sensor and a flow rate sensor.

A further embodiment of any of the foregoing embodiments may additionally and/or alternatively include the process further comprising fluidly coupling at least one reservoir to the refrigerant collection line; configuring the at least one reservoir to collect a refrigerant.

Other details of the ionized refrigerant injection/reclamation system are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.

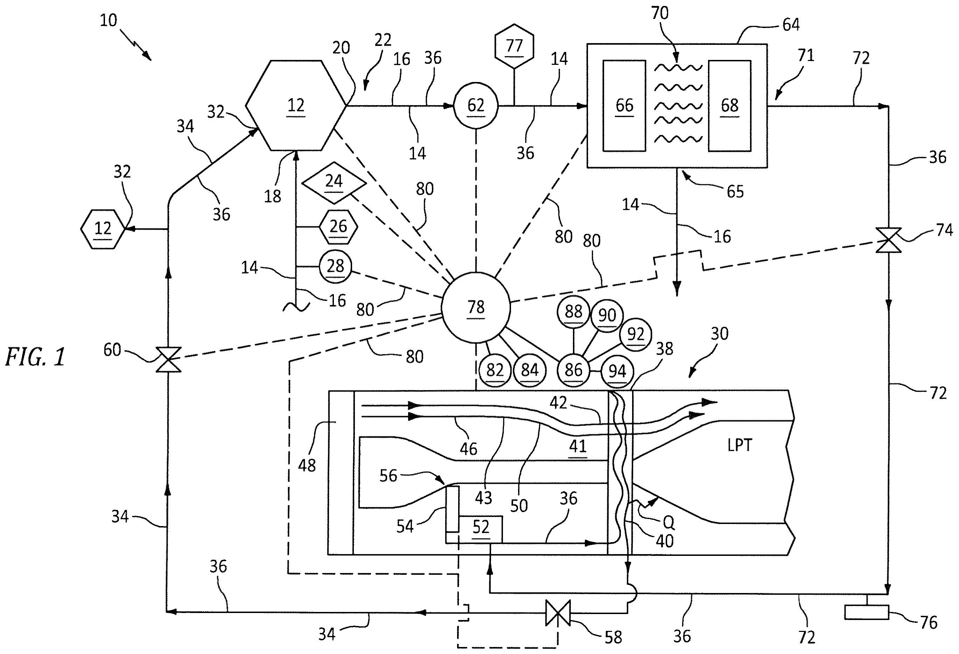

Fig. 1 is a schematic representation of an exemplary ionized refrigerant injection/reclamation system.

Referring now to Fig. 1, showing an exemplary ionized refrigerant injection/reclamation system 10 or simply system 10. The system 10 can include at least one evaporative cooling chamber 12. The evaporative cooling chamber 12 can be in operative communication with a flow passage 14. The flow passage 14 can be configured to transport a working fluid 16. The evaporative cooling chamber 12 can include a working fluid inlet 18 fluidly coupled with the flow passage 14. The evaporative cooling chamber 12 can include a working fluid outlet 20. The working fluid outlet 20 can be fluidly coupled with the flow passage 14 on a discharge side 22 of the evaporative cooling chamber 12.

The flow passage 14 can be in operative communication with at least one temperature sensor 24, pressure sensor 26, and flow rate sensor 28. These sensors 24, 26, 28 provide valuable data regarding the working fluid 16 flowing through any of the flow passages 14. In an exemplary embodiment, the working fluid 16 can be air and the like available in a device such as a gas turbine engine 30. The working fluid 16 can need cooling. The evaporative cooling chamber 12 can be in operative communication with additional sensors 24, 26, 28 that monitor the conditions of the evaporative cooling chamber 12.

The system 10 includes a refrigerant injector 32 fluidly coupled with the evaporative cooling chamber 12. The refrigerant injector 32 can be fluidly coupled with a refrigerant supply line 34. The refrigerant supply line 34 can transport a refrigerant 36. The refrigerant 36 can be selected from among many different refrigerants 36. The refrigerant 36 is not restricted to any specific chemical element, molecule, isotope and/or combination thereof. The refrigerant 36 can be in a liquid phase at the refrigerant injector 32 and injected into the evaporative cooling chamber 12. The liquid phase of the refrigerant 36 upon being injected into the evaporative cooling chamber 12 can evaporate and create a heat transfer from the working fluid 16 into the refrigerant 36. The working fluid 16 can be at a temperature high enough to evaporate the refrigerant 36. The phase change of the liquid refrigerant 36 into a vapor cools the working fluid 16. The working fluid 16 discharged from the evaporative cooling chamber 12 is cooler than when the working fluid 16 entered the chamber 12.

The system 10 can include a condenser 38 fluidly coupled with the refrigerant supply line 34. The condenser 38 can include a condenser coil 40. The condenser coil 40 can be configured to condense the refrigerant 36. The condenser 38 can be fluidly coupled with an air stream passage 41 associated with the gas turbine engine 30. The condenser coil 40 can be in operative communication with an air stream 42 that can flow through the air stream passage 41. The air stream 42 can be configured to transfer thermal energy Q from the refrigerant 36 flowing through the coil 40 to the air stream 42 in order to change the phase of the refrigerant 36 from a vapor phase to a liquid phase. The air stream 42 can include a gas turbine engine air stream 43, such as a fan discharge air 46 from a fan 48 on the gas turbine engine 30. The fan discharge air 46 can be a bypass flow 50. It is contemplated that other gas turbine air streams 43 in various locations can be employed to flow through the condenser 38. The condenser 38 can be located in a variety of locations throughout the gas turbine engine 30.

The condenser 38 can be in operative communication with a compressor 52. The compressor 52 can be configured to compress the refrigerant 36. The compressor 52 can be a variable speed compressor. The compressor 52 can be in operative communication with a gearbox 54. The gearbox 54 can provide rotary mechanical energy to the compressor 52. The gearbox 54 can be in operative communication with rotating equipment 56 in the gas turbine engine 30. The rotating equipment 56 can include various electric motors, rotating shafts/spools and the like.

An expansion valve 58 can be fluidly coupled between the condenser 38 and the evaporative cooling chamber 12. The expansion valve 58 can regulate the refrigerant 36 flow and pressure flowing from the condenser 38 to the evaporative cooling chamber 12. A liquid flow control valve 60 can be fluidly coupled in the refrigerant supply line 34 downstream from the expansion valve 58 and upstream of the evaporative cooling chamber 12. The liquid flow control valve 60 can be configured to regulate liquid refrigerant 36 flow.

It is contemplated that multiple evaporative cooling chambers 12 can be employed throughout the gas turbine engine 30 and be supplied with the liquid refrigerant 36.

The system 10 can include an ionizer 62 located downstream from the evaporative cooling chamber 12. The ionizer 62 can be configured to ionize the refrigerant 36 discharged from the evaporative cooling chamber 12. The ionizer 62 can employ electromagnetic radiation, disassociative techniques or non-dissociative techniques. Ionizing the refrigerant 36 can enhance recovery from the working fluid 16. The refrigerant 36 may not be completely ionized until the refrigerant 36 reaches the ionizer 62. The refrigerant 36 can be injected into the evaporative cooling chamber 12 in a non-ionized or partially ionized state.

The working fluid 16 and refrigerant 36 can flow from the ionizer 62 through the flow passage 14 into a reclaimer 64. The reclaimer 64 can be located downstream from the ionizer 62. The reclaimer 64 can be an ionized refrigerant reclaim device configured to remove the refrigerant 36 from the working fluid 16 flowing through the reclaimer 64. The reclaimer 64 can include a working fluid discharge 65 configured to expel the working fluid 16 from the reclaimer 64 after the refrigerant 36 has been removed from the working fluid 16. The working fluid 16 discharges to the flow passage 14.

The reclaimer 64 can be configured to employ an electric field, a magnetic field and/or a combination thereof to reclaim the refrigerant 36. The reclaimer 64 can employ both electric field(E-field) and magnetic field(B-field) techniques. It is contemplated that the reclaimer 64 can employ periodically alternating field directions(for example a positive E-field periodically alternating with a negative E-field), and/or periodically alternating field types (for example positive E-field periodically alternating with a positive B-field), and/or periodically alternating field types and directions (for example positive E-field periodically alternating to a negative B-field, to a positive B-field, to a negative E-field) and/or any combination of periodically alternating field directions and field types. The reclaimer 64 is not only limited to electric and magnetic fields.

In an exemplary embodiment shown, the reclaimer 64 can include a positive electrode plate 66 opposite a negative electrode plate 68. The positive electrode plate 66 and negative electrode plate 68 can generate an electronic field 70 employed to reclaim the refrigerant 36. The refrigerant 36 can be extracted from the working fluid 16 within the reclaimer 64.

The reclaimer can include a refrigerant discharge 71. The refrigerant discharge 71 can expel the captured refrigerant 36 to flow from the reclaimer 64 to the compressor 52. The compressor 52 can be located downstream from the reclaimer 64. A refrigerant collection line 72 can transport the refrigerant 36 from the reclaimer 64 to the compressor 52. A vapor flow control valve 74 can be fluidly coupled with the refrigerant collection line 72 and employed to regulate flow.

The system 10 can deploy multiple cooling chambers 12 simultaneously in parallel or in series. Different working fluids 16 that require heat rejection can benefit from vaporization of varying refrigerant 36 materials having different boiling points and/or different fluid properties. Dedicated flow paths can be employed to support the differing refrigerants 36. The compressor 52 can include different stages to circulate the differing refrigerants 36. The system 10 can employ a variety of loops to supply the refrigerant 36 to various evaporative cooling chambers 12. The variety of loops can return the refrigerant 36 to the compressor 52 and /or condenser 38. Multiple reservoirs 76 can be employed throughout the system 10 to collect the refrigerant 36. Multiple ionizer 62 and reclaimer 64 devices can be employed throughout the system 10. An ionization hub 77 can be employed to handle multiple loops containing the working fluid 16 with refrigerant 36.

The system 10 can include a controller 78. The controller 78 can be in operative communication with any of the temperature sensor 24, pressure sensor 26 and flow rate sensor 28. The controller 78 can be in operative communication with the compressor 52 and expansion valve 58. The controller 78 can be in operative communication with the ionizer 62 and the reclaimer 64. The controller 78 can be in operative communication with any of the evaporative cooling chambers 12 as well as with any flow control devices, such as liquid flow control valves 60, vapor flow control valve 74 and reservoir 76 employed in the operation of the system 10.

The controller 78 may include hardware, firmware, and/or software components that are configured to perform the functions disclosed herein, including the functions of the system 10. While not specifically shown, the controller 78 may include other computing devices (e.g., servers, mobile computing devices, etc.) and subsystems which may be in communication with each other and/or the controller 78 via a communication network 80 to perform one or more of the disclosed functions. The controller 78 may include at least one processor 82 (e.g., a controller, microprocessor, microcontroller, digital signal processor, etc.), memory 84, and an input/output (I/O) subsystem 86. The controller 78 may be embodied as any type of computing device e.g., a server, an enterprise computer system, a network of computers, a combination of computers and other electronic devices, or other electronic devices. Although not specifically shown, the I/O subsystem 86 typically includes, for example, an I/O controller, a memory controller, and one or more I/O ports. The processor 82 and the I/O subsystem 86 are communicatively coupled to the memory 84. The memory 84 may be embodied as any type of computer memory device (e.g., volatile memory such as various forms of random access memory).

The I/O subsystem 86 is communicatively coupled with a number of hardware, firmware, and/or software components, including a data storage device 88, a display 90, a communication subsystem 92, and a user interface (UI) subsystem 94. The data storage device 88 may include one or more hard drives or other suitable persistent storage devices (e.g., flash memory, memory cards, memory sticks, and/or others).

A technical advantage of the disclosed ionized refrigerant injection/reclamation system includes an increase in heat transfer away from the working fluid to the refrigerant within the evaporative cooling chamber.

Another technical advantage of the disclosed ionized refrigerant injection/reclamation system includes reducing size, weight and cost of the system components.

Another technical advantage of the disclosed ionized refrigerant injection/reclamation system includes employing a variety of refrigerants to match the heat transfer conditions throughout the gas turbine engine.

Another technical advantage of the disclosed ionized refrigerant injection/reclamation system includes employing refrigerant to improve heat transfer and reclaiming the refrigerant for continuous recycle.

Another technical advantage of the disclosed ionized refrigerant injection/reclamation system includes the improved cooling mechanism for cooling working fluids flowing in the gas turbine engine.

There has been provided a ionized refrigerant injection/reclamation system. While the ionized refrigerant injection/reclamation system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An ionized refrigerant injection reclamation system comprising:
at least one evaporative cooling chamber having a working fluid inlet and a working fluid outlet fluidly coupled with the working fluid inlet;
a refrigerant injector operatively coupled with the at least one evaporative cooling chamber;
a refrigerant supply line fluidly coupled with the refrigerant injector;
a condenser fluidly coupled with the refrigerant injector via the refrigerant supply line;
a compressor in operative communication with the condenser;
a reclaimer in operative communication with the compressor via a refrigerant collection line; and
an ionizer in operative communication with the reclaimer and in operative communication with the at least one evaporative cooling chamber.

2. The ionized refrigerant injection reclamation system according to claim 1, wherein a working fluid is fluidly coupled to a working fluid inlet of the evaporative cooling chamber and a working fluid outlet of the evaporative cooling chamber; the working fluid is fluidly coupled to the ionizer and the working fluid is fluidly coupled to the reclaimer downstream from the ionizer; the working fluid is fluidly coupled to a working fluid discharge on the reclaimer; and the working fluid is fluidly coupled to the flow passage downstream of the working fluid discharge on the reclaimer.

3. The ionized refrigerant injection reclamation system according to claim 1 or 2, wherein a refrigerant is fluidly coupled to the refrigerant injector from a refrigerant supply line fluidly coupled to the condenser; the refrigerant is fluidly coupled to a refrigerant discharge on the reclaimer to a refrigerant collection line; the refrigerant is fluidly coupled to the compressor along the refrigerant collection line; and the refrigerant is fluidly coupled to the condenser from the compressor.

4. The ionized refrigerant injection reclamation system according to any of claims 1 to 3, further comprising:
an expansion valve fluidly coupled between the condenser and the refrigerant injector.

5. The ionized refrigerant injection reclamation system according to any of claims 1 to 4, further comprising:
at least one reservoir fluidly coupled to the refrigerant collection line, wherein the at least one reservoir is configured to collect a refrigerant.

6. The ionized refrigerant injection reclamation system according to any of claims 1 to 5, wherein the condenser comprises a condenser coil, the condenser coil configured to condense a refrigerant from a vapor phase to a liquid phase.

7. The ionized refrigerant injection reclamation system according to any of claims 1 to 6, wherein the compressor is in operative communication with a gearbox, wherein the gearbox is configured to provide rotary mechanical energy to the compressor.

8. A gas turbine engine having an ionized refrigerant injection reclamation system according to any of claims 1 to 7, comprising:
an air stream passage configured to flow an air stream through the gas turbine engine;
the condenser being fluidly coupled with the air stream passage;
the ionizer in operative communication with the working fluid outlet of the evaporative cooling chamber.

9. The gas turbine engine having an ionized refrigerant injection reclamation system according to claim 8, further comprising:
a controller in operative communication with at least one of the evaporative cooling chamber, the ionizer, the reclaimer, the compressor, an expansion valve, a temperature sensor, a pressure sensor and a flow rate sensor.

10. A process of forming gas turbine engine having an ionized refrigerant injection reclamation system comprising:
forming an air stream passage;
configuring the air stream passage to flow an air stream through the gas turbine engine;
fluidly coupling a condenser with the air stream passage;
fluidly coupling a compressor in operative communication with the condenser;
fluidly coupling a reclaimer in operative communication with the compressor via a refrigerant collection line;
fluidly coupling an ionizer in operative communication with the reclaimer;
forming at least one evaporative cooling chamber having a working fluid inlet and a working fluid outlet fluidly coupled with the working fluid inlet, coupling the ionizer in operative communication with the working fluid outlet;
operatively coupling a refrigerant injector with the at least one evaporative cooling chamber;
fluidly coupling a refrigerant supply line with the refrigerant injector; and
fluidly coupling the condenser with the refrigerant injector via the refrigerant supply line.

11. The process according to claim 10, further comprising:
fluidly coupling an expansion valve between the condenser and the refrigerant injector.

12. The process according to claim 10 or 11, further comprising:
coupling a gearbox in operative communication with the compressor; and
configuring the gearbox to provide rotary mechanical energy to the compressor.

13. The process according to any of claims 10 to 12, wherein the condenser comprises a condenser coil;
configuring the condenser coil to condense a refrigerant from a vapor phase to a liquid phase responsive to the air stream cooling the refrigerant.

14. The process according to any of claims 10 to 13, further comprising:
configuring the reclaimer to remove a refrigerant from the working fluid; and
separating the refrigerant and the working fluid in the reclaimer.

15. The process according to any of claims 10 to 14,
further comprising:
coupling a controller in operative communication with at least one of the evaporative cooling chamber, the ionizer, the reclaimer, the compressor, an expansion valve, a temperature sensor, a pressure sensor and a flow rate sensor; and/or
further comprising:
fluidly coupling at least one reservoir to the refrigerant collection line; configuring the at least one reservoir to collect a refrigerant.
